# EUROPÄISCHE PATENTANMELDUNG

(11) **EP 0 768 211 A1**
(43) Veröffentlichungstag der Anmeldung: **16.04.1997**
(21) Anmeldenummer: 96115875.5
(22) Anmeldetag: 03.10.1996
(51) Int. Cl.: B60R 16/02, G08C 23/06

(54) **Vorrichtung zum Übertragen von Signalen**

(30) Priorität: 10.10.1995 DE 19537628
(71) Anmelder: MST Automotive GmbH Automobil-Sicherheitstechnik, 63743 Aschaffenburg (DE)
(72) Erfinder: Frisch, Ralph, 63776 Mömbris (DE)
(74) Vertreter: Fuchs, Luderschmidt & Partner

(57) **Zusammenfassung**

Zur Übertragung von Signalen zwischen einem drehbaren Bauteil und einem feststehenden Bauteil, insbesondere zwischen Lenkrad (1) und Lenkstock (2) oder dergl in einem Kraftfahrzeug wird eine Vorrichtung vorgeschlagen, bei der die Signalübertragung mittels eines spiralförmig gewickelten, in ein zweiteiliges Gehäuse (3, 4) eingeschlossenen Leiters (5) erfolgt.

Um zu vermeiden, daß der spiralförmig gewickelte Leiter (5) als Sender oder Empfänger von Störsignalen wirkt, soll erfindungsgemäß als Leiter ein Lichtwellenleiter (5) verwendet werden.

## Beschreibung

Die Erfindung bezieht sich auf eine Vorrichtung zur Übertragung von Signalen zwischen einem drehbaren Bauteil und einem feststehenden Bauteil, insbesondere zwischen Lenkrad und Lenkstock oder dergl. in einem Kraftfahrzeug, mittels eines spiralförmig gewickelten, in ein zweiteiliges Gehäuse eingeschlossenen Leiters.

Für die Übertragung von Signalen zwischen einem drehbaren Bauteil und einem feststehenden Bauteil, z.B. zwischen dem Lenkrad und Lenkstock in einem Kraftfahrzeug, hat man lange Zeit ausschließlich Schleifringkontakte verwendet. Diese können verschleißen und verschmutzen, was über die Lebensdauer eines Kraftfahrzeuges ohne gravierende Folgen bleibt, wenn es sich beispielsweise, nur um die Schließung eines Stromkreises zur Betätigung der Hupe handelte.

Bei modernen Kraftfahrzeugen müssen zwischen Lenkrad und Lenkstock jedoch mehr und qualitativ andere Signale übertragen werden. Viele Automobilhersteller gingen schon für die Schließung eines Kontaktes zur Zündung eines im Lenkrad untergebrachten Airbags von Schleifringkontakten ab. Insbesondere aber für diverse Fernbetätigungen, die vom Armaturenbrett oder anderen im Griffbereich des Fahrers im Kraftfahrzeug liegenden Stellen auf das Lenkrad verlegt werden sowie für digitalisierte Signale, sind Schleifringkontakte nur bedingt brauchbar. Man hat daher schon spiralig aufgewickelte, in einem zweiteiligen Gehäuse eingeschlossene Leiter entwickelt und angewendet, die so ausgebildet sind, daß sie - ausgehend von einer mittleren Wicklungslage - der jeweils vorgesehenen Anzahl von Lenkradumdrehungen in eine weitere oder engere Wicklungslage folgen können, ohne daß eine schleifende Kontaktgabe erforderlich ist.

Um den Lenkradumdrehungen von Anschlag zu Anschlag ohne Bruch und Einklemmen folgen zu können, sind dazu ein verhältnismäßig langer und mit ausreichendem Abstand zwischen den Windungen gewickelter Leiter und ein entsprechend dimensioniertes, zweiteiliges Gehäuse erforderlich. Wegen der Wicklungslänge stellen die üblicherweise verwendeten Kupferleiter eine ideale Antenne für das Auffangen von Störimpulsen dar, die insbesondere für die digitale Signalübertragung zu gravierenden Übermittlungsfehlern führen können. Außerdem ist der Kupferleiter nur mit erheblichem Aufwand abzuschirmen, so daß er auch als Sender für die Abstrahlung elektromagnetischer Störungen in Betracht kommt. Schließlich spielt auch der Platzbedarf für das zweiteilige Leitergehäuse bei den zunehmend mit weiteren Funktionen befrachteten Lenkrädern eine beachtliche Rolle.

Es besteht daher die Aufgabe, die geschilderten Nachteile zu vermeiden und eine Vorrichtung der eingangs genannten Art vorzuschlagen, mit der bei geringem Platzbedarf eine Vielzahl von Signalen, insbesondere auch von hochfrequenten, digitalen Signalen übertragen werden kann, ohne daß der spiralig gewickelte Leiter als elektromagnetischer Sender Störungen verursacht oder als Empfänger Störungen in das Signalübertragungssystem einspeist.

Zur Lösung dieser Aufgabe wird vorgeschlagen, daß als Leiter ein Lichtwellenleiter verwendet wird.

Derartige Leiter sind an sich bekannt und einschließlich ihrer Anschlußsysteme in den verschiedensten Bereichen der Technik bereits im Einsatz. Sie haben den Vorteil, daß sie bei gleichem Querschnitt eine wesentlich höhere Signalmenge übertragen können, als metallische Leiter, bzw., daß man bei einer gegebenen Signalmenge mit deutlich geringeren Querschnitten auskommt. Dies wirkt sich bei dem spiralförmig gewickelten, gattungsmäßigen Leiter besonders stark aus, so daß man mit flacheren und im Durchmesser kleineren Gehäuseteilen auskommt.

Der Hauptvorteil liegt aber darin, daß der spiralförmig gewickelte Leiter nun nicht mehr als Sender oder Empfänger für elektromagnetische Störsignale wirkt, d.h. daß er hinsichtlich der EMV-Verträglichkeit allen metallischen Leitern überlegen ist.

Zweckmäßigerweise werden zwei oder mehr Lichtwellenleiter verwendet oder einer, über den gleichzeitig eine Vielzahl unterschiedlicher Signale übertragen werden kann. Endseitig weist der Lichtleiter Steckverbindungen auf, von denen je eine an den beiden relativ zueinander drehbaren Gehäuseteilen angeordnet ist. Über diese Steckverbindungen ist der Anschluß an das im Lenkrad bzw. am Lenkstock angeordnete Signalübertragungssystem möglich. Dabei müssen selbstverständlich Wandler zur Umwandlung elektrischer Signale in optische Signale und umgekehrt vorgesehen werden, soweit nicht optische Signale erzeugt bzw. direkt benutzt werden.

Müssen außer den Signalen noch vergleichsweise große Stromstärken übertragen werden, beispielsweise für die Betätigung der Hupe oder zum Auslösen der Airbag-Zündung, kann man parallel zu dem Lichtwellenleiter noch einen oder mehrere metallische Leiter anordnen, wobei elektromagnetische Störungen nicht auftreten, weil es sich um niederfrequente Vorgänge handelt oder weil sie im Ereignisfall (Airbag-Zündung) hingenommen werden können.

Im Hinblick auf die Unterbringung in dem zweiteiligen Gehäuse ist es zweckmäßig, wenn der Lichtwellenleiter zwischen zwei schmalen, bandförmigen Kunststoffolien einkaschiert ist, wodurch eine einwandfreie Führung beim Auf- und Abwickeln gewährleistet werden kann und die elastischen Rückstellkräfte beeinflußt und an den jeweiligen Anwendungsfall angepaßt werden können. Auf die gleiche Weise kann man auch den Lichtwellenleiter und die metallischen Leiter nebeneinander einkaschieren.

Bei geeigneter Materialauswahl können auch eine oder beide bandförmige Kunststoffolien selbst als Lichtleiter benutzt werden.

Sind am Lenkrad Einrichtungen zur Erzeugung optischer Signale vorgesehen, können diese über die Steckverbindung direkt, d.h. ohne Wandler, mit dem Lichtwellenleiter verbunden werden.

Weitere Einzelheiten werden anhand des in den Figuren 1 bis 3 schematisch dargestellten Ausführungsbeispiels näher erläutert.
- Fig. 1: zeigt einen vertikalen Schnitt durch den Befestigungsbereich zwischen Lenkrad und Lenkstock
- Fig. 2: zeigt einen Schnitt durch das Gehäuse senkrecht zu Fig. 1
- Fig. 3: zeigt vergrößert einen Schnitt durch den Signalleiter.

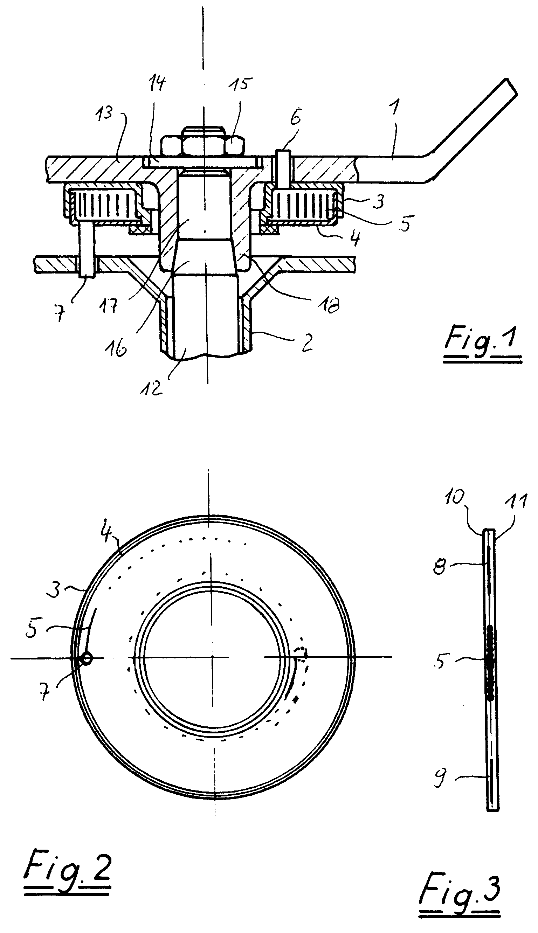

In Fig. 1 sind teilweise das Lenkrad (1) und der Lenkstock (2) vereinfacht und ohne Anspruch auf konstruktive Genauigkeit dargestellt. Das Lenkrad (1) besitzt einen zentralen Befestigungsbereich (13) mit einstückig angeformter Buchse (18), die mit ihrem konischen Endteil auf einem entsprechend konisch geformten Bereich der Lenksäule (12) aufsitzt, wobei über eine Unterlegscheibe (14) und eine auf das mit Gewinde versehene Ende der Lenksäule (12) aufgeschraubte Mutter (15) eine kraftschlüssige Verbindung zwischen Lenkrad (1) und Lenksäule (12) hergestellt wird. Außerdem ist über den mit einer Kerbverzahnung versehenen Bereich (17) der Lenksäule und eine entsprechende Verzahnung in der Buchse (18) noch eine formschlüssige Verbindung vorhanden. Die Lenksäule (12) ist drehbar im Lenkstock (2) gelagert, der einen Teil der Fahrzeugkarosserie darstellt, die im vorliegenden Zusammenhang als der feststehende Teil im Unterschied zum Lenkrad als drehbarem Teil bezeichnet wird.

Wie bei den herkömmlichen, spiralförmig gewickelten, metallischen Leitern ist der erfindungsgemäße Lichtwellenleiter (5) in einem zweiteiligen Gehäuse (3, 4) eingeschlossen, dessen mitdrehender Teil (3) mit dem Befestigungsbereich (13) des Lenkrades (1) fest verbunden ist, während dessen feststehender Teil (4) mit dem Lenkstock (2) fest verbunden ist. Das Gehäuse (3, 4) ist zumindest im äußeren Bereich ähnlich wie eine Schuhcremedose geformt, d.h. die gegensinnig um etwa 90° abgekanteten Ränder liegen dicht aneinander, lassen sich aber relativ zueinander um die Mittelachse des Gehäuses (3, 4) drehen, die auch die Mittelachse des Lenkrades (1) und der Lenksäule (12) ist. An jedem Gehäuseteil (3, 4) ist eine Steckverbindung (6, 7) oder dergl. vorgesehen, über die der im Gehäuse (3, 4) spiralig aufgewickelte Lichtwellenleiter (5) mit den Signalleitungssystemen des Lenkrades (1) und des Lenkstocks (2) bzw. der Karosserie verbindbar ist.

Fig. 2 zeigt das zweiteilige Gehäuse im Schnitt senkrecht zur Darstellung in Fig. 1. Das mit dem Lenkrad (1) verbundene Gehäuseteil (3) übergreift mit seinem rechtwinklig abgekanteten Rand den gegensinnig rechtwinklig abgekanteten Rand des mit dem Lenkstock (2) verbundenen Gehäuseteils (4). Zwischen der inneren Begrenzung des Gehäuses (3, 4) und dessen äußeren Randbereichen ist der spiralig aufgewickelte Lichtwellenleiter (5) angeordnet.

Fig. 3 zeigt im Schnitt ein Beispiel für einen Lichtwellenleiter gemäß der Erfindung, bei dem zwischen zwei schmalen bandförmigen Kunststoffolien (10, 11) im mittleren Bereich der eigentliche Lichtwellenleiter (5) angeordnet ist, während in den beiden äußeren Bereichen noch je ein metallischer Leiter (8, 9) angeordnet ist.

## Patentansprüche

1. Vorrichtung zur Übertragung von Signalen zwischen einem drehbaren Bauteil und einem feststehenden Bauteil, insbesondere zwischen Lenkrad (1) und Lenkstock (2) oder dergl. in einem Kraftfahrzeug, mittels eines spiralförmig gewickelten, in einem zweiteiligen Gehäuse (3, 4) eingeschlossenen Leiters, dadurch gekennzeichnet, daß als Leiter ein Lichtwellenleiter verwendet wird.

2. Vorrichtung nach Anspruch 1, dadurch gekennzeichnet, daß zwei oder mehr Lichtwellenleiter (5) verwendet werden, bzw. ein Lichtwellenleiter (5), über den gleichzeitig eine Vielzahl unterschiedlicher Signale übertragen werden kann.

3. Vorrichtung nach Anspruch 1 oder 2, dadurch gekennzeichnet, daß der Lichtwellenleiter (5) endseitig Steckverbindungen (6, 7) aufweist, von denen je eine an den beiden relativ zueinander drehbaren Gehäuseteilen (3, 4) angeordnet ist.

4. Vorrichtung nach einem der Ansprüche 1 bis 3, dadurch gekennzeichnet, daß jedes der Gehäuseteile einen Wandler für die Umwandlung elektrischer Signale in optische Signale und umgekehrt aufweist.

5. Vorrichtung nach einem der Ansprüche 1 bis 4, dadurch gekennzeichnet, daß parallel zu dem Lichtwellenleiter (5) noch ein oder mehrere metallische Leiter (8, 9) für die Energieübertragung angeordnet sind.

6. Vorrichtung nach einem der Ansprüche 1 bis 4, dadurch gekennzeichnet, daß der Lichtwellenleiter (5) zwischen zwei schmalen, bandförmigen Kunststoffolien (10, 11) einkaschiert ist.

7. Vorrichtung nach Anspruch 5, dadurch gekennzeichnet, daß der Lichtwellenleiter (5) und die metallischen Leiter (8, 9) nebeneinander zwischen zwei schmalen bandförmigen Kunststoffolien (10, 11) einkaschiert sind.

8. Vorrichtung nach einem der Ansprüche 1 - 7, dadurch gekennzeichnet, daß eine oder beide der bandförmigen Kunststoffolien selbst als Lichtwellenleiter (5) benutzt werden.

9. Vorrichtung nach einem der Ansprüche 1 bis 8, dadurch gekennzeichnet, daß am Lenkrad (1) angeordnete Einrichtungen zur Erzeugung optischer Signale über die Steckverbindung (6) direkt mit dem Lichtwellenleiter (5) verbunden sind.
